# EUROPEAN PATENT SPECIFICATION

(11) **EP 1 544 089 B1**
(45) Date of publication and mention of the grant of the patent: **16.01.2008**
(21) Application number: 04028097.6
(22) Date of filing: 26.11.2004
(51) Int. Cl.: B62D 37/02, B62D 35/00

(54) **A motor vehicle with a device for controlling aerodynamic flow using synthetic jets**
Kraftfahrzeug mit einer Kontrollanlage für die aerodynamische Strömung, mittels synthetischen Jets
Véhicule avec un système contrôlant le flux aérodynamique, en utilisant des jets synthétiques

(30) Priority: 18.12.2003 IT TO20031019
(43) Date of publication of application: 22.06.2005
(73) Proprietor: C.R.F. Società Consortile per Azioni, 10043 - Orbassano (Torino) (IT)
(72) Inventor: Casella, Mauro, 10043 Orbassano (Torino) (IT); Tregnago, Roberto, 10043 Orbassano (Torino) (IT)
(74) Representative: Notaro, Giancarlo

(56) References cited:
- DE-A- 4 226 573
- DE-A- 19 633 205
- DE-A- 19 738 008
- US-A- 5 908 217
- US-A- 5 957 413
- US-B1- 6 378 932
- US-B1- 6 685 256

## Description

The present invention relates to the field of devices for controlling aerodynamic flow on the structure of a motor vehicle, for example a motor car or a lorry.

A motor-vehicle according to the preamble of claim 1 is known from US-B1-6 378 932.

When a motor vehicle is travelling, a major influence on the aerodynamic resistance and aerodynamic lift, as well as on the generation of noise is due to phenomena of separation of the air flow that occur on specific points of the vehicle, such as for example along the uprights of the windscreen and the contour of the rear surface of the vehicle.

A motor-vehicle according to the preamble of claim 1 is known from US-B1-6 378 932.

The purpose of the present invention is to propose a motor vehicle provided with a simple and efficient device that will enable elimination or at least reduction of said phenomena of separation of the air flow.

In order to achieve said purpose, the subject of the invention is a motor vehicle as set forth in claim 1.

It should be pointed out that the use of synthetic jets is already known in the aeronautics field (see, for example, US 6 471 477 B2). The present invention consists basically in the idea of applying the concept of synthetic jets already known in the aeronautic field to a motor vehicle, for example a motor car or lorry, according to the specific arrangement that has been defined above.

In the case of application to a motor car, the aforesaid openings are in the form of one or more slits located on the bodywork of the motor car in one or more positions chosen between: uprights of windscreen, uprights of rear window, rear edge of roof, rear edges of sides, bottom edge of the rear surface of the bodywork.

In the case of a semi-articulated lorry, comprising a tractor and a semi-trailer, the openings are in the form of one or more slits located in one or more positions chosen between: top and side parts of the terminal section of the tractor, top and side parts of the initial section of the semi-trailer, the entire contour of the tail section of the semi-trailer.

Further characteristics and advantages of the invention will emerge from the ensuing description, with reference to the annexed drawings, which are provided purely by way of non-limiting example and in which:
Figures 1 and 2 are a schematic perspective front view and a schematic perspective rear view, respectively, of a motor car according to the invention;
Figure 3 is a schematic side view of a lorry according to the invention;
Figures 4 and 5 are schematic views illustrating a possible embodiment, not forming part of the invention, of the device for generating synthetic jets, in two different operating conditions; and
Figure 6 is a schematic perspective view of the embodiment of the device for generating synthetic jets according to the invention.

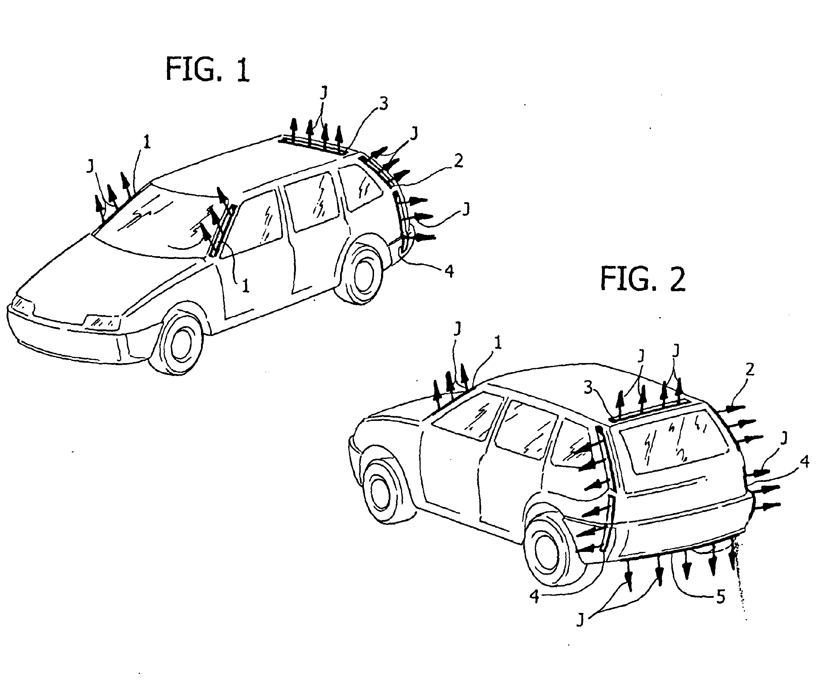

With reference to Figures 1 and 2, a motor car presents a bodywork, the outer surface of which has slits 1 along the uprights of the windscreen, slits 2 along the uprights of the rear window, slits 3 along the rear edge of the roof, slits 4 along the rear edges of the sides, and slits 5 along the bottom edge of the rear surface of the motor vehicle.

Through each of the slits described above there can be generated synthetic jets J, which will be defined in greater detail in what follows.

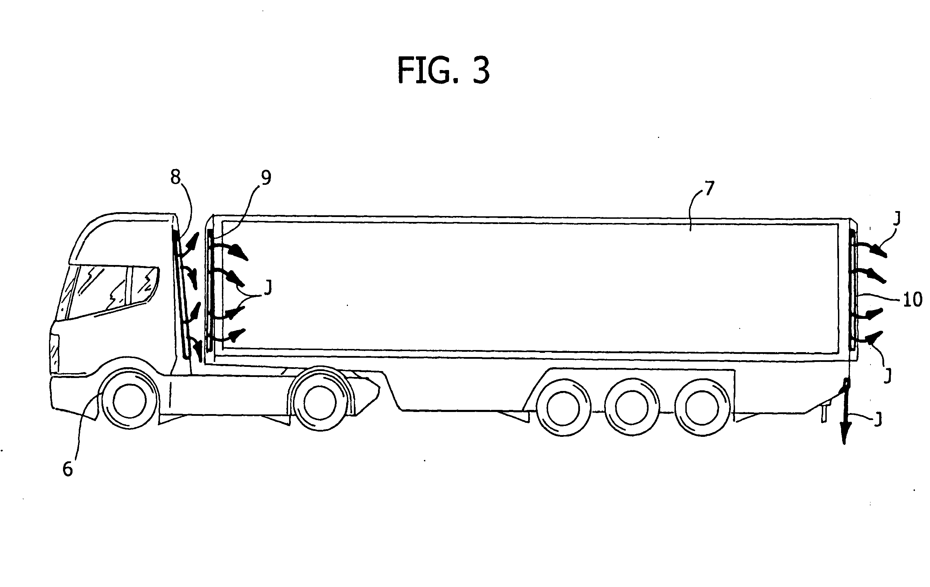

Figure 3 shows the application of the invention to a semi-articulated lorry, comprising a tractor 6 and a semi-trailer 7. The vehicle is provided with slits 8 along the top and side parts of the terminal section of the tractor 6, slits 9 along the top and side parts of the initial section of the semi-trailer 7, and slits 10 along the entire contour of the tail section of the semi-trailer.

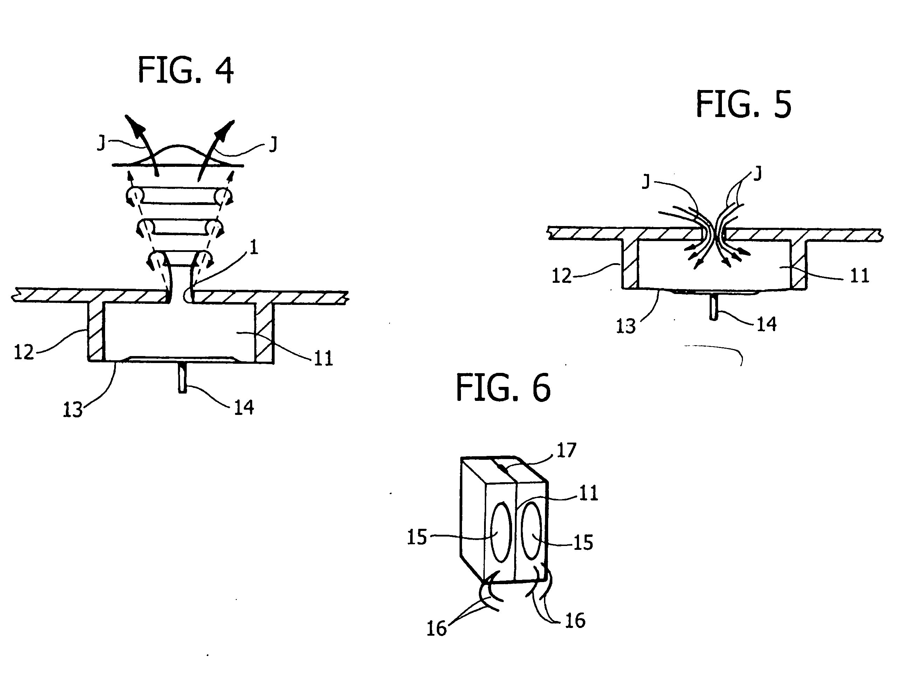

With reference to Figures 4 and 5, each of the slits illustrated above, in the case in point each of the slits 1, communicates with an internal cavity 11 delimited by rigid walls of the structure 12 of the bodywork and by at least one mobile wall 13 (in the case illustrated consisting of a piston joined to a stem 14). The stem 14 is designed to be controlled, with reciprocating motion, by actuator means of any type (for example, piezoelectric actuators or MEMS) so as to vary cyclically the volume of the chamber 11 and consequently generate alternately an air flow directed outwards and an air flow directed inwards (see Figures 4 and 5). The mean flow rate of the jets through the slit is substantially zero. The jets are pulsed at a pre-set or controlled rate so that, at the outlet of the slits, there is formed a pair of vortices that interact with the flow that laps the bodywork of the motor vehicle, causing it to change its aerodynamic characteristics, thus limiting the separation of the air flow from the bodywork

Figure 6 illustrates a further variant, in which the chamber 11 is delimited by two opposed membranes 15, which are piezoelectric membranes. Said membranes are supplied via conductors 16 so as to generate the synthetic jets through an outlet nozzle 17. In said embodiment, therefore, the actuator means are integrated in the cavity for generating the synthetic jets.

From the foregoing, it is evident that the invention consists basically in the application of the concept of synthetic jets to the control of aerodynamic flow on the bodywork of a motor vehicle.

Of course, without prejudice to the principle of the invention, the details of construction and the embodiments may vary widely with respect to what is described and illustrated herein, without thereby departing from the scope of the present invention.

## Claims

1. A motor vehicle having: at least one portion of external surface with one or more openings (1-5); at least one internal cavity (11) communicating with said opening or openings (1-5), and delimited at least in part by one or more mobile elements (13; 15); and actuator means (15) for displacing the mobile element, or each mobile element (15), between two operative positions so as to vary cyclically the volume of said internal cavity (11) for the purpose of generating one or more jets of air pulsed at a pre-set or controlled frequency (J) through said opening or openings (1-5), **characterized in that** said actuator means are piezoelectric actuators and **in that** said internal cavity (11) is delimited between two piezoelectric membranes (15) set opposite to one another, which form also the aforesaid actuator means.

2. The motor vehicle according to Claim 1, **characterized in that** said openings are in the form of one or more slits (1-5) located on the bodywork of the motor vehicle in one or more positions chosen between: uprights of windscreen, uprights of rear window, rear edge of roof, rear edges of sides, bottom edge of the bottom surface of the bodywork.

3. The motor vehicle according to Claim 1, comprising a tractor (6) and a semi-trailer (7), **characterized in that** said openings are in the form of one or more slits (8-10) located on the motor vehicle in one or more positions chosen between: top and side parts of the terminal section of the tractor, top and side parts of the initial section of the semi-trailer, contour of the tail section of the semi-trailer.

## Patentansprüche

1. Kraftfahrzeug mit: zumindest einem Abschnitt einer externen Oberfläche mit einer oder mehreren Öffnungen (1-5); zumindest einen internen Hohlraum (11) in Kommunikation mit der oder den Öffnungen (1-5) und zumindest teilweise begrenzt durch ein oder mehrere mobile Elemente (13-15); und Betätigungsmittel (15) zum Versetzen des mobilen Elements oder jedes mobilen Elements (15) zwischen zwei Betriebspositionen, um das Volumen des internen Hohlraums (11) zylindrisch zu variieren, um einen oder mehrere Luftstrahle zu erzeugen, die mit einer vorher festgelegten oder gesteuerten Frequenz (J) durch die Öffnung oder die Öffnungen (1-5) pulsieren,
**dadurch gekennzeichnet, dass** die Betätigungsmittel piezoelektrische Betätiger sind, und dass der innere Hohlraum (11) zwischen zwei piezoelektrischen Membranen (15) begrenzt ist, die einander gegenüberstehen, und welche ebenso die vorher erwähnten Betätigungsmittel bilden.

2. Kraftfahrzeug nach Anspruch 1, **dadurch gekennzeichnet, dass** die Öffnungen in der Form von einem oder mehreren Schlitzen (1-5) vorliegen, die sich auf der Karosserie des Kraftfahrzeugs befinden in einer oder mehreren Positionen ausgewählt aus: oberhalb der Windschutzscheibe, oberhalb der Heckscheibe, hintere Dachkante, hintere Seitenkanten, unteren Kante der unteren Oberfläche der Karosserie.

3. Kraftfahrzeug nach Anspruch 1 umfasst eine Zugmaschine (6) und einen Sattelauflieger (7), **dadurch gekennzeichnet, dass** die Öffnungen in der Form von einem oder mehreren Schlitzen (8-10) vorliegen, die sich auf dem Kraftfahrzeug befinden in einer oder mehreren Positionen ausgewählt aus: obere und Seitenteile des abschließenden Abschnitts der Zugmaschine, obere und Seitenteile des inneren Abschnitts des Sattelaufliegers, Kontur des Heckabschnitts des Sattelaufliegers.

## Revendications

1. Véhicule automobile présentant : au moins une partie de surface externe comportant une ou plusieurs ouvertures (1-5) ; au moins une cavité interne (11) communiquant avec cette ouverture ou ces ouvertures (1-5) et délimitée au moins en partie par un ou plusieurs éléments mobiles (13 ; 15) ; et des moyens d'actionnement (15) destinés à déplacer l'élément mobile, ou chaque élément mobile (15), entre deux positions opératoires afin de faire varier cycliquement le volume de la cavité interne (11) afin de créer un ou plusieurs jets d'air pulsé à une fréquence préréglée ou commandée (J) à travers l'ouverture ou les ouvertures (1-5), **caractérisé en ce que** les moyens d'actionnement sont des actionneurs piézoélectriques et **en ce que** la cavité interne (11) est délimitée entre deux membranes piézoélectriques (15) montées l'une en face de l'autre, qui constituent également les moyens d'actionnement mentionnés ci-dessus.

2. Véhicule automobile selon la revendication 1, **caractérisé en ce que** les ouvertures se présentent sous la forme d'une ou plusieurs fentes (1-5) situées sur la carrosserie du véhicule automobile, à un ou plusieurs emplacements choisis parmi les suivants : montants du pare-brise, montants de la vitre arrière, bord arrière du toit, bords arrière des côtés, bord inférieur de la surface inférieure de la carrosserie.

3. Véhicule automobile selon la revendication 1, comprenant un tracteur (6) et un semi-remorque (7), **caractérisé en ce que** les ouvertures se présentent sous la forme d'une ou plusieurs fentes (8-10) situées sur le véhicule automobile à un ou plusieurs emplacements choisis parmi : les parties supérieures et latérales du tronçon terminal du tracteur, les parties supérieures et latérales du tronçon avant du semi-remorque, le contour du tronçon de queue du semi-remorque.
